Europäisches Patentamt

European Patent Office

Office européen des brevets

(11) Veröffentlichungsnummer: **0 351 836**
**A2**

## (12) EUROPÄISCHE PATENTANMELDUNG

(21) Anmeldenummer: **89113288.8**

(22) Anmeldetag: **19.07.89**

(51) Int. Cl.⁴: **B23Q 3/06 , B23Q 7/14 , B23Q 1/02 , B23H 11/00**

(30) Priorität: **19.07.88 DE 3824595**

(43) Veröffentlichungstag der Anmeldung:
**24.01.90 Patentblatt 90/04**

(84) Benannte Vertragsstaaten:
**AT CH DE ES FR GB IT LI NL SE**

(71) Anmelder: **Büchler B-SET AG
Wiler Strasse 98
CH-9230 Flawil(CH)**

(72) Erfinder: **Büchler, René
Weidweg 2
CH-9345 Oberbüren(CH)**

(74) Vertreter: **EGLI-EUROPEAN PATENT ATTORNEYS
Widenmayerstrasse 5
D-8000 München 22(DE)**

(54) **Palette.**

(57) Eine Palette (1) zum hochgenauen räumlichen Festlegen eines Werkstücks (15) gegenüber einen Maschinentisch (19) einer Maschine, insbesondere Drahterosionsmaschine (21), zum Bearbeiten des Werkstücks (19) ermöglicht dadurch eine hochgenaue Werkstückbearbeitung auch von mehreren Werkstücken sowie von schwergewichtigen oder weit über die Kontur der Palette auskragenden Werkstükken mit großen Abmessungen, daß zwei voneinander durch eine einen Werkstückbearbeitungsbereich festlegende Ausnehmung beabstandete Einspannstellen (17) vorgesehen sind, an denen das Werkstück (15) mittels Aufspannelementen (12) gegenber der Palette (1) festlegbar ist.

EP 0 351 836 A2

FIG. 1

Die vorliegende Erfindung betrifft eine Palette zum hochgenauen räumlichen Festlegen eines Werkstückes gegenüber einem Maschinentisch einer Maschine zum Bearbeiten des Werkstückes.

Eine Palette der eingangs genannten Art ist aus den älteren deutschen Patentanmeldungen P 37 32 206.0, P 38 14 102.7, P 37 32 206 und dem deutschen Gebrauchsmuster G 87 01 619.2 bekannt. Diese Palette hat beispielsweise eine plattenförmige oder würfelförmige Gestalt und ist mit Befestigungseinrichtungen zum Festlegen eines Werkstückes gegenüber der Palette versehen. Vor einer Werkstückbearbeitung, die beispielsweise mit einer Drahterosionsmaschine erfolgen kann, wird zunächst die Palette an einem Einstellplatz derart mit dem Werkstück verbunden, daß das Werkstück die gewünschte räumliche Lage gegenüber der Palette einnimmt. Bei einem anschließenden Aufsetzen der Palette auf den Maschinentisch der Drahterosionsmaschine ist durch eine hochgenaue relative Verrastung der Palette gegenüber dem Maschinentisch gewährleistet, daß das Werkstück selbst die gewünschte Relativlage gegenüber dem Maschinentisch äußerst genau einhält.

Ein wesentlicher Vorteil der Werkstückbearbeitung unter Zuhilfenahme von Paletten besteht darin, daß das Einrichten des Werkstückes erfolgen kann, ohne daß das Werkstück hierzu in seine endgültige Bearbeitungslage auf die Bearbeitungsmaschine gebracht werden muß. Durch die Palettentechnik wird also erreicht, daß die Einrichtzeit für das Werkstück nicht zu Lasten der Bearbeitungszeiten der Bearbeitungsmaschine geht.

Insbesondere im Fall der Drahterosionstechnik muß das Werkstück mit dem zu bearbeitenden Teil über die unter dem Werkstück liegende Kontur der Palette herausragen, so daß insbesondere bei schwereren Werkstücken zum Teil erhebliche Hebelmomente zwischen dem Werkstück und der Palette zu übertragen sind. Diese Momente begrenzen naturgemäß die Größe der mit der bekannten Größe verarbeitbaren Werkstücke und schränken die Arbeitsgenauigkeit ein. Darüberhinaus kann bei den bekannten Paletten nur ein zur Bearbeitung anstehenden Werkstück eingespannt werden.

Andererseits ist es aus der US-PS 4 577 846 bereits bekannt, daß auf dem Maschinentisch von Drahterosionsmaschinen Aufspannbalken fest angeordnet sind, an denen das Werkstück mittels Aufspannelementen festlegbar sind. Üblicherweise haben die Aufspannbalken beidseitig eine in Horizontalrichtung verlaufende Nut, in die das Aufspannelement eingreift. Das Aufspannelement erstreckt sich von dem Aufspannbalken aus im wesentlichen horizontal, um das Werkstück in einer vorbestimmten Lage bezüglich des Maschinentisches seitlich über den Aufspannbalken auskragend zu halten. Wenn bei einer derartigen Maschine das Werkstück voreingerichtet werden soll, wird die Voreinstellung des Werkstückes außerhalb der Bearbeitungsmaschine an einem Voreinstellplatz durch geeignete Festlegung des Werkstückes an dem Aufspannelement vorgenommen. Naturgemäß treten durch das Lösen des Aufspannelementes von dem Voreinstellplatz und durch das Anbringen des Aufspannelementes an dem Aufspannbalken des Maschinentisches gewisse Positionierungsungenauigkeiten in der Horizontalebene auf. Ferner bewirkt die sogenannte "fliegende" Anordnung des Werkstückes gegenüber dem Aufspannbalken des Maschinentisches gleichfalls Momente, die bei vorgegebener Bearbeitungsgenauigkeit die Größe der bearbeitbaren Werkstücke bzw. ihr Gewicht begrenzen.

Gegenüber diesem Stand der Technik liegt der vorliegenden Erfindung die Aufgabe zugrunde, eine Palette der eingangs genannten Art so weiterzubilden, daß mehrere Werkstücke für Serienbearbeitung auf einem Voreinstellplatz auf der Palette befestigt und genau positioniert werden können, wobei dies auch für Werkstücke mit sehr hohem Gewicht bzw. für weit über die Grundfläche der Palette auskragende Werkstücke möglich sein soll.

Diese Aufgabe wird bei einer Palette nach dem Oberbegriff des Patentanspruchs 1 bzw. 3 durch die im kennzeichnenden Teil dieser Ansprüche aufgeführten Merkmale gelöst.

Bei der in Anspruch 1 festgelegten Palettenstruktur, bei der der Werkstückbearbeitungsbereich durch eine Ausnehmung zwischen zwei voneinander beabstandeten Einspannstellen der Palette festgelegt ist, wird das Werkstück in einer sich brückenartig über den Werkstückbearbeitungsbereich erstreckenden Lage mittels Aufspannelementen an den beiden Einspannstellen gehalten. Durch diese Art der Werkstückfestlegung liegt bei Einsatz der Palette für den Bereich der Erosionstechnik der Bearbeitungsbereich für die Erosionsbearbeitung im Gegensatz zum Stand der Technik nicht mehr außerhalb der Palettenkontur, sondern innerhalb einer Ausnehmung in der Palette. Während der Erosionsbearbeitung liegt also der Erosionsdraht im Bereich der Ausnehmung zwischen den beiden Einspannstellen, so daß ohne Beschränkung des Bearbeitungsbereiches eine beidseitige Werkstückeinspannung gegenüber der Palette vorgenommen werden kann. Durch diese brückenartige Werkstückeinspannung gegenüber der Palette werden Hebelmomente zwischen dem Werkstück und der Palette ausgeräumt, so daß auch schwere Werkstücke mit großen Abmessungen freihängend gegenüber der Palette befestigt und eingespannt werden können. Auch ist es möglich, mehrere Werkstücke für eine spätere Serienbearbeitung an der Palette zu befestigen.

Gemäß einem weiteren Grundgedanken der vorliegenden Erfindung, der im Patentanspruch 3 definiert ist, ist der im Stand der Technik mit dem Maschinentisch verbundene Aufspannbalken beim Erfindungsgegenstand mit der Palette verbunden, so daß auch einer einmaligen Ausrichtung des Werkstückes gegenüber der Palette an einem Voreinstellplatz die Positioniergenauigkeit des Werkstückes gegenüber der Bearbeitungsmaschine nur noch von der vergleichsweise einfach beherrschbaren Positionierung der Palette gegenüber dem Maschinentisch abhängt.

Bei dieser Anordnung kann die Palette selbst den Voreinstellplatz bilden, da nur noch die Anordnung des Werkstükkes gegenüber der Palette einmalig festgelegt werden muß. Eine im Stand der Technik aufgetretene Ungenauigkeit in der Werkstückanordnung in der Horizontalebene aufgrund des Lösens des das Werkstück tragenden Aufspannelementes am Einrichtplatz und des nachfolgenden Befestigens des Aufspannelementes gegenüber einem am Maschinentisch festliegenden Aufspannbalken entfällt somit bei der erfindungsgemäßen Palette.

Bevorzugte Ausgestaltungen der vorliegenden Erfindung sind in den Unteransprüchen definiert.

Nachfolgend wird unter Bezugnahme auf die beiliegenden Zeichnungen eine bevorzugte Ausführungsform der vorliegenden Erfindung näher erläutert. Es zeigen:

Fig. 1 eine perspektivische Darstellung einer Palette;

Fig. 2 eine Draufsicht auf die Palette gemäß Fig. 1;

Fig. 3 ein Detail eines Querschnittes durch die Palette gemäß Fig. 1;

Fig. 4 eine vereinfachte Seitenansicht, teilweise in Querschnittsdarstellung einer Drahterosionsmaschine sowie der Palette.

Fig. 5 eine perspektivische Darstellung einer Palette nach einem Ausführungsbeispiel der Erfindung.

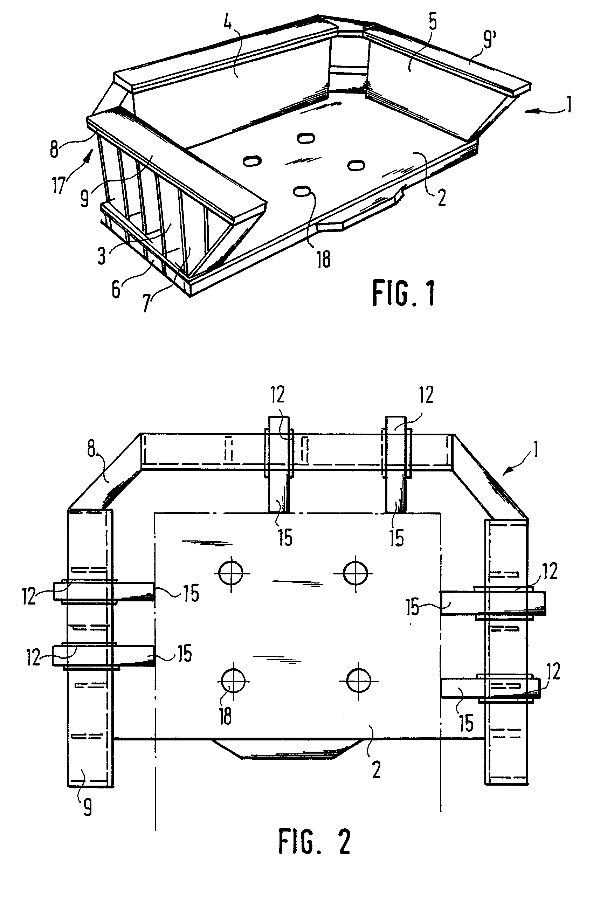

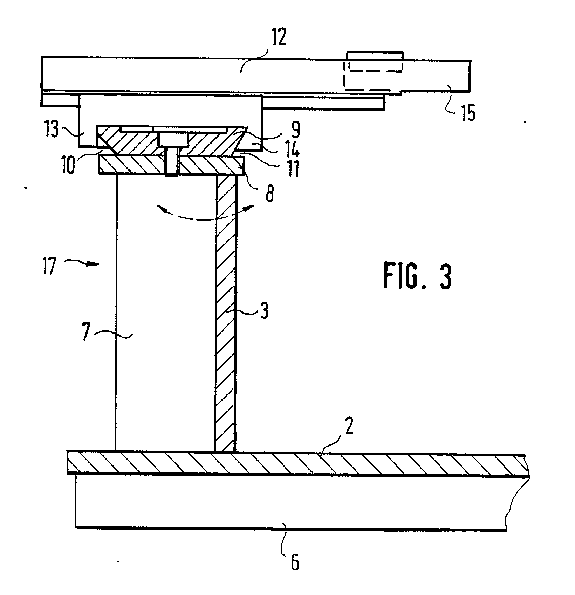

Die in ihrer Gesamtheit in Fig. 1 mit dem Bezugszeichen 1 bezeichnete Palette umfaßt im wesentlichen einen Palettenboden 2, von dem aus sich drei Palettenwände 3, 4, 5 im wesentlichen vertikal nach oben erstrecken. Sowohl der Palettenboden 2 wie auch die Palettenwände 3, 4, 5 sind durch Verstärkungselemente 6, 7, die sich entlang des Palettenbodens 2 bzw. entlang der Palettenwände 3, 4, 5 erstrecken, versteift, wie insbesondere auch in Fig. 3 zu erkennen ist.

Die Palettenwände 3, 4, 5 gehen an ihrem oberen Ende in einen Steg 8 über, der einen horizontalen oberen Abschluß der Palettenwände 3, 4, 5 festlegt. An dem Steg 8 ist eine Führungsplatte 9 befestigt, die beidseitig mit Nuten 10, 11 versehen ist, mit denen Backen 13, 14 von Aufspannelementen 12 Eingriff nehmen, mit denen ein Werkstück 15 gegenüber der Palette 1 festlegbar ist.

Bezüglich technischer Details der Einspanntechnik von Werkstücken mit einem Backen aufweisenden Aufspannelement an einem Aufspannbalken, wie er durch die Wände 3 bis 5, den Steg und die Führungsplatte 8, 9 gebildet wird, wird auf die europäische Patentanmeldung 83 810 610.2 verwiesen, deren Offenbarungsgehalt durch diese explizite Bezugnahme in den Offenbarungsgehalt der vorliegenden Anmeldung übernommen wird.

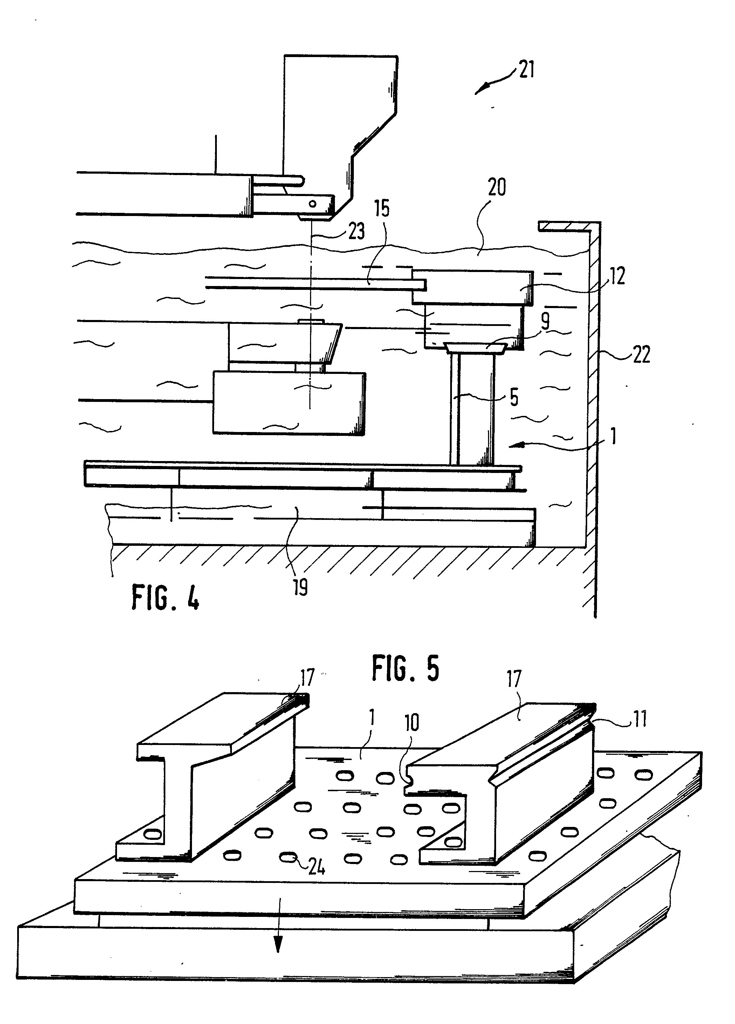

An der Unterseite des Palettenbodens 2 sind Zentrierelemente 18 vorgesehen, die an nicht dargestellten Gegenelementen am Maschinentisch zum Festlegen der Relativlage der Palette 1 gegenüber dem Maschinentisch 19 (Fig. 4) zusammenwirken.

Wie insbesondere in den Fig. 1 und 3 zu erkennen ist, definieren die sich gegenüberliegenden Palettenwände 3, 5 eine im wesentlichen U-förmige Ausnehmung zwischen den Führungsplatten 9, 9'.

Wie unter Bezugnahme auf Fig. 4 noch näher erläutert wird, ist diese Ausnehmung der Palette 1 zwischen den Palettenwänden 3, 5 oberhalb des Palettenbodens 2 der Arbeitsbereich für die Drahterosionsmaschine.

Wie in Fig. 2 gezeigt ist, können auf einer einzigen Palette 1 mehrere Werkstücke 15 mittels mehrerer Aufspannelemente 12 befestigt werden. Der Zustellbereich der Drahterosionsmaschine gegenüber den Werkstücken 15 ist in dieser Figur durch die strichpunktierte Linie angedeutet.

Fig. 4 zeigt eine schemenhafte Darstellung einer Drahterosionsmaschine 21 mit einem Erosionsbehälter 22, der das Elektrolyt 20 aufnimmt. Im Erosionsbehälter 22 liegt der Maschinentisch 19, der die Palette 1 trägt. Teile der Palette 1, die mit den unter Bezugnahme auf die Fig. 1 bis 3 beschriebenen Teilen der Palette übereinstimmen, sind mit entsprechenden Bezugszeichen bezeichnet.

Die (an sich im Stand der Technik bekannte) Drahterosionsmaschine schneidet das Werkstück 15 mit einer Drahtelektrode 23. Eine Erläuterung von Details der Drahterosionsmaschine kann fortgelassen werden, da der Aufbau von Drahterosionsmaschinen hinlänglich bekannt ist und für das Wesen des Erfindungsgegenstandes maßgeblich ist.

Wie in der in Fig. 4 gezeigten Querschnittsdarstellung zu sehen ist, kann sich die erfindungsgemäße Palette 1 über den gesamten Erosionsbehälter 22 erstrecken, obwohl für die Bearbeitung von kleinen Werkstücken auch Paletten mit geringeren Abmessungen zum Einsatz kommen können. Vorzugsweise ist die Palette 1 mit dem Palettenboden 2, den Palettenwänden 3 bis 5, den Verstärkungselementen 6, 7 und dem Steg 8 als einstückiges Aluminiumgußteil ausgeführt. Aluminium als Material für die Palette ist nicht nur wegen seines niedrigen Gewichtes als besonders vorteilhaft anzusehen, sondern trägt auch aufgrund seiner guten Wärmeleiteigenschaften dazu bei, daß sich die Palette schnell an die Umgebungstemperatur anpaßt so daß Ungenauigkeiten aufgrund von thermischen Dehnungen weitgehend ausgeräumt werden können. Fig. 5 zeigt ein weiteres Ausführungsbeispiel, bei dem die Aufspannbalken 17 mit der Palette 1 verschraubt sind. Diese Aufspannbalken 17 haben eine einheitliche Höhe, die in ihren Maßen an die erforderliche Referenzhöhe der Maschine angepaßt ist. Die Palette 1 hat gerasterte Schraubenlöcher 24, so daß die Aufspannbalken 17 je nach Anwenderwunsch im Rastermaß aufgeschraubt werden können. Auch diese Aufspannbalken können die oben erwähnten Nuten 10, 11 aufweisen. Auch sie können aus Aluminium sein. Durch diesen modulartigen Aufbau kann die Palette noch flexibler den jeweiligen Anforderungen angepaßt und gleichzeitig auch kostengünstiger hergestellt werden.

**Bezugszeichenliste**

1 Palette
2 Palettenboden
3, 4, 5 Palettenwände
6, 7 Verstärkungselemente
8 Steg
9 Führungsplatte
10, 11 Nuten
12 Aufspannelement
13, 14 Backen
15 Werkstück
17 Aufspannbalken
18 Zentrierelemente
19 Maschinentisch
20 Elektrolyt
21 Drahterosionsmaschine
22 Erosionsbehälter
23 Drahtelektrode
24 Schraublöcher.

Ansprüche

Palette

1. Palette (1) zum hochgenauen räumlichen Festlegen eines Werkstückes (15) gegenüber einem Maschinentisch (19) einer Maschine zum Bearbeiten des Werkstückes, insbesondere einer Drahterosionsmaschine (21), gekennzeichnet durch zwei voneinander durch eine einen Werkstückbearbeitungsbereich festlegende Ausnehmung beabstandete Einspannstellen (17), an denen das Werkstück (15) mittels Aufspannelementen (12) gegenüber der Palette (1) festlegbar ist.

2. Palette nach Anspruch 1, dadurch gekennzeichnet, daß die Einspannstellen durch Aufspannbalken (17) gebildet werden, die fest mit der Palette verbunden sind und zusammen mit dieser den im Querschnitt im wesentlichen U-förmig umgrenzten Werkstückbearbeitungsbereich festlegen.

3. Palette (1) zum hochgenauen räumlichen Festlegen eines Werkstückes (15) gegenüber einem Maschinentisch (19) einer Maschine zum Bearbeiten des Werkstückes (15), insbesondere einer Drahterosionsmaschine (21), dadurch gekennzeichnet, daß die Palette (1) wenigstens einen mit der Palette (1) fest verbundenen Aufspannbalken (17) aufweist, gegenüber dem das Werkstück (15) mittels Aufspannelementen (12) festlegbar ist.

4. Palette nach Anspruch 3, dadurch gekennzeichnet, daß die Palette (1) zwei voneinander beabstandete Aufspannbalken (17) aufweist, an denen das Werkstück (15) mittels zweier Aufspannelemente (12) in einer die Palette (1) brückenartig überspannenden Lage festlegbar ist.

5. Palette nach einem der Ansprüche 1 bis 4, dadurch gekennzeichnet, daß die Palette (1) und der/die Aufspannbalken (17) einstückig aus Aluminium gegossen sind.

6. Palette nach einem der Ansprüche 1 bis 4, dadurch gekennzeichnet, daß der/die Aufspannbalken (17) an der Palette (1) angeschraubt ist/sind.

7. Palette nach einem der Ansprüche 2 bis 6, dadurch gekennzeichnet, daß der/die Aufspannbalken (17) beidseitig in ihrer Längsrichtung verlaufende Nuten (10, 11) aufweisen, mit denen Backen (13, 14) der Aufspannelemente (12) Eingriff nehmen.

8. Anordnung aus einer einen Maschinentisch (19) aufweisenden Maschine (21) und einer Palette (1) nach einem der Ansprüche 1 bis 6, dadurch gekennzeichnet, daß der Maschinentisch (19) als im wesentlichen ebener Tisch ohne Aufspannbalken ausgeführt ist und daß auf dem Maschinentisch (19) und/oder an der Palette (1) Zentrierelemente (18) zum Festlegen der relativen Lage der Palette (1) gegenüber dem Maschinentisch (19) in der Horizontalebene vorgesehen sind.

FIG. 1

FIG. 2

FIG. 3

FIG. 4

FIG. 5